# EUROPÄISCHE PATENTSCHRIFT

(11) **EP 0 687 247 B1**
(45) Veröffentlichungstag und Bekanntmachung des Hinweises auf die Patenterteilung: **29.04.1998**
(21) Anmeldenummer: 94908258.0
(22) Anmeldetag: 24.02.1994
(51) Int. Cl.: C02F 1/46, C02F 9/00

(54) **VERFAHREN ZU EINER ELEKTROCHEMISCHEN BEHANDLUNG VON ZELLSTOFFABLAUGE**
PROCESS FOR ELECTROCHEMICAL TREATMENT OF CELLULOSE WASTE LYE
PROCEDE DE TRAITEMENT ELECTROCHEMIQUE LA LESSIVE RESIDUAIRE DE CELLULOSE

(30) Priorität: 01.03.1993 DE 4306260
(43) Veröffentlichungstag der Anmeldung: 20.12.1995
(73) Patentinhaber: Chemische Werke Zell-Wildshausen GMBH, D-40549 Düsseldorf (DE)
(72) Erfinder: BRANDT, Burkhard, D-33106 Paderborn (DE); BORN, Gerhard, D-47800 Krefeld (DE)
(74) Vertreter: Meyer-Roedern, Giso, Dr.
(86) Internationale Anmeldenummer: DE9400192
(87) Internationale Veröffentlichungsnummer: WO9420419

(56) Entgegenhaltungen:
- EP-A- 0 117 529
- US-A- 3 793 174
- DATABASE WPI Section Ch, Week 7646, Derwent Publications Ltd., London, GB; Class F05, AN 76-86554X & SU,A,504 847 (CEPA) 7. Mai 1976

## Beschreibung

Bei der Herstellung von Zellstoff fallen in großem Umfang ligninhaltige Nebenprodukte an. Beim Zellstoffaufschluß nach dem Sulfitverfahren entsteht Sulfitzellstoffablauge, die die Hauptmasse der Aufschlußchemikalien und die gelösten organischen und anorganischen Holzanteile enthält. Lignin liegt in der Sulfitzellstoffablauge in Form von Ligninsulfonaten vor.

Es sei hier klargestellt, daß der Begriff Zellstoffablauge historisch auf das Auslaugen von Holz zurückgeht und keine Aussage zur pH-Werteinstellung beinhaltet, d. h. sich insbesondere nicht auf ein alkalisches Medium bezieht.

Ligninsulfonate haben vielfältige technische Anwendungen, die hauptsächlich auf ihrer Binde- und Klebekraft einerseits und ihren dispergierenden Eigenschaften andererseits beruhen. Neben dem klassischen Einsatz von Ligninsulfonaten in Gerbereien und Gießereien seien hier Anwendungen in der chemischen Industrie, z. B. bei der Herstellung von Klebstoffen, Farbstoffen, Pflanzenschutzmitteln und Düngemitteln, bei der Kautschukverarbeitung, bei der Spanplattenherstellung, in der Galvanotechnik, in der keramischen Industrie, als Betonzusatzmittel, als Erdölförderhilfsmittel und als Preßhilfsmittel bei der Herstellung von Tierfutter erwähnt. Da die Ligninsulfonate auf der nachwachsenden Rohstoffbasis Holz beruhen, ist ihre langfristige Verfügbarkeit sicher.

Nicht zuletzt unter Umweltschutzgesichtspunkten wird der Sulfitaufschluß von Zellstoff überwiegend nach dem Magnesiumverfahren durchgeführt, das weithin an die Stelle des Kalziumverfahrens getreten ist. Die anfallenden Magnesiumligninsulfonate genügen den sich für anspruchsvolle Verwendungen stellenden Ansprüchen nicht immer. Magnesium stört in vielen technischen Prozessen, insbesondere weil es zur Mischkristallbildung neigt oder sich der Antagonismus zu Kalzium bemerkbar macht. Magnesiumligninsulfonate lassen sich auch nur sehr schwer durch chemische Verfahren wie z. B. eine Umfällung mit Alkali- oder Erdalkalihydroxiden in wirtschaftlich nutzbare Verbindungen überführen. Gibt man beispielsweise zu einer Magnesiumablauge Natriumhydroxid zu, so kommt es zu feinstverteilten Niederschlägen, die nicht filtrierbar sind. Die Niederschläge bestehen im wesentlichen aus Magnesiumhydroxiden und enthalten je nach Art und Kochung des den Zellstoff liefernden Ausgangsmaterials eine Vielzahl von Verbindungen wechselnder Zusammensetzung, die unter diesen Bedingungen ausfallen. Die Fällung ist nicht quantitativ und nicht zeitlich begrenzt. Es werden selbst noch nach Wochen Nachfällungen beobachtet. Das ist der Hauptgrund, weshalb derartige Ablaugen in ihrer Wertschöpfung begrenzt sind. Die Ablaugen werden überwiegend eingedickt und verbrannt, wobei der hohe Heizwert des Lignin genutzt und die Prozeßchemikalien für den Zellstoffaufschluß, insbesondere Magnesium und Schwefel, zurückgewonnen werden.

Aus der DE-OS 23 31 972 ist es bekannt, Sulfitzellstoffablauge durch Ultrafiltrieren und anschließende umgekehrte Osmose zu fraktionieren, d. h. im wesentlichen nach der Molekularmasse der Ligninsulfonate und anderen Bestandteilen zu trennen und aufzukonzentrieren. Eine chemische Umsetzung der problematischen Magnesiumligninsulfonate findet dabei nicht statt.

Die US-PS 4717450 beschreibt ein elektrochemisches Verfahren bei dem Chloridionen aus Zellstoffablauge entfernt werden. Bei der behandelten Ablauge handelt es sich um ein Sulfatlignin (Kraftlignin), das in einem alkalischen Aufschlußprozeß gewonnen wird und in dem Lignin in Form von Ligninsulfaten vorliegt. Die Ablauge wird in den Kathodenraum eines elektrochemischen Rekators eingebracht, um ihr durch eine Anionentauschmembran in den Anodenraum übertretende Chloridionen zu entziehen. Neben dem Sulfataufschluß verfahren ist in der US-PS 47 17 450 auch das Sulfitaufschlußverfahren erwähnt.

Aus den US-PSen 2 354 553, 3 148 177, 4 584 057, 4 775 480 und 5 334 300 ist eine Elektrodialyse von Zellstoffablauge bekannt. Die Elektrodialyse ist ein Entsalzungsvorgang, bei dem der Zellstoffablauge die kationogenen und anionogenen Komponenten unsepariert entzogen werden.

Nach dem Oberbegriff des Patentanspruchs 1 aus der US-PS 47 17 450 bekannter Stand der Technik ist somit ein Verfahren zu einer elektrochechemischen Behandlung von Ligninsulfonate enthaltender Zellstoffablauge in einem Reaktionsgefäß, das durch ein Diaphragma oder eine Membran in einen Kathodenraum mit einer Kathode und in einen Anodenraum mit einer Anode unterteilt ist, bei dem man die Zellstoffablauge nur einem der Elektrodenräume und dem anderen Elektrodenraum einen anderen Elektrolyten zuführt.

Aufgabe der Erfindung ist es, ein Verfahren dieser Art zu schaffen, mit dem sich Ligninsulfonate enthaltende Zellstoffablauge in großem Maßstab wirtschaftlich zu vielfältig nutzbaren Wertstoffen hoher Reinheit aufbereiten läßt.

Zur Lösung dieser Aufgabe ist nach dem kennzeichnenden Teil des Patentanspruchs 1 vorgesehen, daß man die Zellstoffablauge dem Anodenraum zuführt, und daß man es bei konstant geregeltem elektrischen Gleichstrom durchführt.

Vorteilhafte Ausgestaltungen des Verfahrens sind in den Patentansprüchen 2 bis 9 gekennzeichnet.

Bei dem Verfahren erfolgt ein Stofftransport durch ein Diaphragma oder eine Membran. Das Diaphragma bzw. die Membran dient zum einen zur Unterteilung des Reaktors in Reaktionsräume. Diese Trennung ist notwendig, damit die während des elektrolytischen Prozesses gebildeten Verbindungen sich nicht mehr miteinander vermischen können. Zum zweiten stellt jede Pore des Diaphragmas bzw. der Membran einen Minireaktor dar, in dem sich ein elektrisches Potential ausbildet und dadurch an organischen Makromolekülen Konstitutionsänderungen erzwingt und ein Passieren in den anderen Reaktionsraum ermöglicht.

Mit dem Verfahren werden Ligninsulfosäuren aus der Zellstoffablauge erzeugt. Die Ligninsulfosäuren werden reproduzierbar, isoliert und mit hoher Reinheit bereitgestellt. Sie haben eine weitgehend einheitliche Molekularmassenverteilung und einen weitgehend reproduzierbaren dreidimensionalen Molekülaufbau. Diese Charakteristika lassen sich durch Verfahrenskenngrößen der Elektroosmose, z. B. durch die Porengröße des Diaphragmas und elektrische Parameter, beeinflussen.

Die für den Magnesium-Zellstoffaufschluß eingesetzten Prozeßchemikalien, insbesondere Magnesium- und Schwefelverbindungen, werden bei dem Verfahren zurückgewonnen, so daß sie dem Aufschlußprozeß wieder zugeführt werden können. Die erhaltenen Ligninsulfosäuren lassen sich mit anderen Agenzien zu neuen Produktfamilien mit vielfältigen Anwendungsmöglichkeiten umsetzen. Durch Versetzen der Ligninsulfosäuren mit Laugen oder Karbonaten oder entsprechenden Übergangselementverbindungen erhält man stabile Ligninsulfonate, ohne daß ein zu entsorgendes Abfallprodukt anfiele. Der pH-Wert der Ligninsulfonate läßt sich in einem Bereich zwischen 2 und 14 stabil einstellen. Die Stoffklasse der wirtschaftlich nutzbaren und in ausreichender Menge bereitstellbaren Ligninsulfonate wird so erheblich erweitert, und es werden den Ligninsulfonaten neue Anwendungsgebiete erschlossen.

Bei einer bevorzugten Variante des Verfahrens werden die katinogenen und anionogenen Komponenten in aufeinanderfolgenden Verfahrensschritten aus der Zellstoffablauge entfernt.

Das Verfahren wird bei konstant geregeltem elektrischen Gleichstrom durchgeführt. Dem entspricht ein konstanter Ionenstrom durch das Diaphragma, der so eingestellt werden kann, daß sich bei guter Stoffmengenbilanz die Erwärmung des Diaphragmas in Grenzen hält. Führungsgröße der Stromregelung ist der Strom, und geführte Größe die Spannung. Zu Beginn des elektrochemischen Vorgangs ist die Spannung hoch, um die erforderliche elektromotorische Kraft zu erreichen und schnell wirtschaftlich einen Ionentransport durch das Diaphragma zu bewirken. Ist der gewünschte Ionenstrom erreicht, so kann die Spannung abgesenkt werden, wobei sich bei konstant geregeltem Strom ein molekülart- und -größenspezifisches Spannungsprofil ergibt.

Das Verfahren kann im Chargenbetrieb, vorzugsweise aber auch kontinuierlich durchgeführt werden. Um den Materialfluß im kontinuierlichen Betrieb zu steuern, wird vorzugsweise eine optische Eigenschaft einer Prozeßflüssigkeit erfaßt, insbesondere ihre optische Dichte oder ihre Farbtönung. Auch andere Meßtechniken sind selbstverständlich möglich, z. B. eine Messung der elektrischen Leitfähigkeit einer Proßzeßflüssigkeit.

Für die Durchführung des erfindungsgemäßen Verfahrens dient wenigstens ein Reaktionsgefäß, in dem durch ein Diaphragma ein Kathodenraum und ein Anodenraum mit je einer darin befindlichen Elektrode - Kathode und Anode - abgeteilt sind.

Wesentlich für jeden elektrochemischen Prozeß ist die Art und Beschaffenheit der Elektroden. Die US-PS 4717450 verwendet als Anode eine Platin-Iridium-Legierung und als Kathode Stahl. Bei einer bevorzugten Variante des Verfahrens wird hingegen als Anode Edelstahl und als Kathode Eisen oder Aluminium verwendet.

Wohlgemerkt läßt sich das elektrochemische Verfahren auch mit Elektroden aus anderen, unter Kostengesichtspunkten weniger bevorzugten Elektroden durchführen, z. B. Gold- oder Platinelektroden.

Das Diaphragma besteht vorzugsweise aus Sinterkeramik.

Für eine zweistufige Behandlung des Zellstoffablauge dient ein erstes Reakticnsgefäß, an dessen Anodenraum ein Ablaugenzulauf und an dessen Kathodenraum ein Wasserzulauf führt und dessen Kathodenraum einen Flüssigkeitsabgang hat, und ein zweites Reaktionsgefäß, an dessen Kathodenraum ein von einem Anodenraumabgang des ersten Reaktionsgefäßes kommender Zulauf und an dessen Anodenraum ein Wasserzulauf führt. Die Reaktionsgefäße sind vorzugsweise baugleich. Das ermöglicht einen unaufwendigen modularen Aufbau der Anlage.

Die Elektroden sind an eine elektrische Gleichstromquelle angeschlossen, die einen elektrischen Gleichstrom geregelter konstanter Stromstärke liefert.

Für die Durchführung des Verfahrens ist vorzugsweise eine Meßeinheit vorgesehen, mit der sich die elektrische Leitfähigkeit oder eine optische Eigenschaft von Flüssigkeit in dem Elektrodenraum eines Reaktionsgefäßes, insbesondere in dem Kathodenraum des ersten Reaktionsgefäßes und dem Anodenraum des zweiten Reaktionsgefäßes, erfassen läßt, beispielsweise ihre optische Dichte oder ihre Farbtönung. Anhand des Meßwerts der Meßeinheit kann ein kontinuierlicher Materialfluß gesteuert werden. Vorzugsweise ist die Meßeinheit eine Lichtsender-Lichtempfängereinheit mit einer Laserdiode und einem Phototransistor.

Die Erfindung wird im folgenden anhand eines in der Zeichnung dargestellten Anlagenschemas und zweier Chromatogramme näher erläutert. Es zeigen:
- Fig. 1: das Schema einer zweistufigen Anlage zur Aufbereitung von zellstoffablauge;
- Fig. 2: das Chromatogramm einer versuchsweise darin behandelten Zellstoffablauge; und
- Fig. 3: das Chromatogramm eines dabei erhaltenen Produkts.

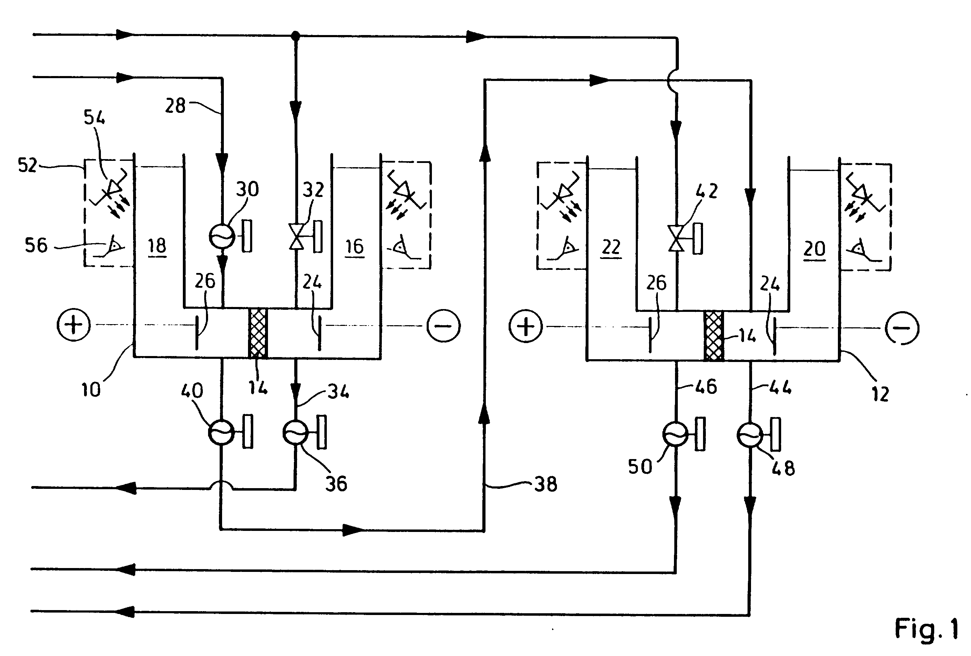

Zu der in Fig. 1 gezeigten zweistufigen Anlage gehören zwei baugleiche Reaktionsgeräße 10, 12, die durch ein Diaphragma 14 in einen Kathodenraum 16, 20 und einen Anodenraum 18, 22 unterteilt sind. In dem Kathodenraum 16, 20 befindet sich eine Kathode 24 aus Eisen oder Aluminium, und in dem Anodenraum 18, 20 eine Anode 26 aus V4A-Stahl, Die Elektroden 24, 26 sind an eine elektrische Gleichstromquelle angeschlossen.

Der Anodenraum 18 des ersten Reaktionsgefäßes 10 hat einen Zulauf 28, über den mittels einer Pumpe 30 Sulfitzellstoffablauge, wie sie z. 3. beim Magnesiumzellstoffaufschluß anfällt, in den Anodenraum 18 gefördert wird. In den Kathodenraum 16 des ersten Reaktionsgefäßes 10 wird über ein Ventil 32 Wasser eingeleitet. In dem ersten Reaktionsgefäß 10 findet ein elektrochemischer Prozeß statt, durch den die Ablauge von kationogenen Komponenten, insbesondere Mg⁺⁺, befreit wird, die durch das Diaphragma 14 in den Kathodenraum übergehen.

Zu Beginn des elektrochemischen Prozesses muß eine hohe Spannung vorgegeben werden, um die für den Ionentransport durch das Diaphragma erforderliche elektromotorische Kraft zu erreichen. Das Stromäquivalent ist um ca. 500 mA größer als die elektromotorische Kraft des zu verarbeitenden Materials. Mit der Ionenleitung durch das Diaphragma 14 gehen Reibungsenergieverluste einher, aufgrund derer es zu einer Erwärmung des Diaphragmas 14 kommt. Der Ionenstrom wird so eingestellt, daß sich die Energieverluste in dem Diaphragma 14 in Grenzen halten und seine Kühlung durch die Prozeßflüssigkeit ausreicht, also keine aufwendige zusätzliche Kühlung des Diaphragmas 14 erforderlich ist. Nach Einsetzen der Ionenleitung und Erreichen des gewünschten Ionenstroms wird die elektrische Spannung der Gleichstromquelle so geregelt, daß der elektrische Gleichstrom durch Nachführen der Spannung auf eine konstante Stromstärke eingestellt wird.

Am Ende der ersten Reaktionsstufe haben sich im Anodenraum 18 des ersten Reaktionsgefäßes 10 Ligninsulfosäuren gebildet, die noch mit anionogenen organischen Komponenten versetzt sind. Bei letzteren handelt es sich um Zuckerfragmente, Thioverbindungen, Bestandteile der nichtgespaltenen, verbliebenen Hemicellulosen u. a. Bei Umsetzung mit NaOH zeigt die im Anodenraum 18 gebildete Flüssigkeit immer noch Ausfällungen, die von den anionogenen organischen Komponenten herrühren. Daher werden in der nachfolgenden weiten Reaktionsstufe die Ligninsulfosäuren von den anionogenen organischen Komponenten isoliert.

Im Kathodenraum 16 des ersten Reaktionsgefäßes 10 befinden sich Magnesiumhydroxid, Mangesiumsulfat und andere. Die Kathodenraumflüssigkeit wird in den Zellstoffaufschlußprozeß zurückgeführt. Dazu ist der Kathodenraum 16 des ersten Reaktionsgefäßes 10 mit einem Abgang 24 versehen, in dem eine Pumpe 36 liegt.

Von dem Anodenraum 18 des ersten Reaktionsgefäßes 10 führt eine Förderleitung 38, in der eine Pumpe 40 liegt, hin zu dem Kathodenraum 20 des zweiten Reaktionsgefäßes 12. Die Pumpe 40 fördert Anodenraumflüssigkeit aus dem ersten Reaktionsgefäß 10 in den Kathodenraum 20 des zweiten Reaktionsgefäßes 12. In den Anodenraum 22 des zweiten Reaktionsgefäßes 12 wird über ein Ventil 42 Wasser eingeieitet. Der Kathodenraum 20 und der Anodenraum 22 des zweiten Reaktionsgefäßes 12 haben je einen Abgang 44, 46, in dem eine Pumpe 48, 50 liegt.

In dem zweiten Reaktionsgefäß 12 findet ein elektrochemischer Prozeß statt, durch den anionogene Komponenten aus der Zellstoffablauge entfernt und das darin enthaltene Lignin in Form von Ligninsulfosäuren isoliert wird. Im Kathodenraum 20 des zweiten Reaktionsgefäßes 12 werden die organischen Verbindungen, so die des makromolekularen Ligninsulfoions gespalten, wobei sie etwa den Charakter eines Carbenium-Ions erhalten können. Das Ligninsulfoanion wandert in Anodenrichtung hin zu dem Diaphragma 14, das einen wohldefinierten Porendurchmesser hat. Zumindest bestimmte Sulfoanionen können aufgrund ihres ungegelmäßigen dreidimensionalen netzwerkartigen Aufbaus die Poren nicht passieren. Unter dem elektrochemischen "Druck" hin zu der Anode 26 kommt es zu Umlagerungen am Diaphragma 14. Durch die Umlagerungsreaktion erhöht sich die Reaktivität des Ligninsystems, wodurch in der Anlage weitere gezielte Umsetzungen mit anderen Agenzien zu völlig neuen Produktfamilien stattfinden können.

Ein Nachweis der Produktqualität der erhaltenen Ligninsulfosäuren kann chromatografisch erbracht werden. Die Lignisulfosäuren zeigen beim Versetzen mit NaOH und anderen Fällungsreagenzien keine Ausfällungen.

Die Ligninsulfosäuren sind stabil. Sie bilden selbst einen verkehrs fähigen Wertstoff und können für die Herstellung anderer Wertstoffe als Ausgangsmaterial dienen.

Der beschriebene zweistufige Prozeß läuft kontinuierlich ab. Zur Steuerung des Materialflusses wird die rotbraune Farbtönung der Prozeßflüssigkeiten erfaßt, und zwar insbesondere die Farbtönung der Kathodenraumflüssigkeit in dem ersten Reaktionsgefäß 10 und die Farbtönung der Anodenraumflüssigkeit in dem zweiten Reaktionsgefäß 12.

Zur Erfassung der Farbtönung dienen Lichtsender-Lichtempfängereinheiten 52 mit je einer Laserdiode 54 und einem Phototransistor 56. Die Laserdiode 54 strahlt Licht hin zu der Flüssigkeit ab, deren Farbton erfaßt werden soll. Die Wellenlänge des eingestrahlten Lichts liegt nahe einer Absorptionsbande des Lignin. Der Phototransistor 56 empfängt von der Flüssigkeit reflektiertes Licht. Der Anstieg der Ligninkonzentration in einer der Frozeßflüssigkeiten wird durch den Abfall der reflektierten Lichtintensität detektiert und umgekehrt. Der Füllstand in den Reaktionsgefäßen 10, 12 wird mit Optokopplern erfaßt und die Anlage mit einer Steuereinheit automatisch betrieben, der die Meßsignale der Lichtsender-Lichtempfängereinheiten und Optokoppler überstellt werden und die alle erwähnten Pumpen 30, 36, 40, 48, 50 und Ventile 32, 42 ansteuert.

Bei einer Pilotanlage fassen der Kathoden- und der Anodenraum 16, 18, 20, 22 der beiden Reaktionsgefäße 10, 12 jeweils ca. 500 1. Beide Reaktionsgefäße 10, 12 werden bei einer Spannung zwischen 40 und 350 V mit einem geregelten Strom von ca. 1,5 A betrieben. Die Anlage liefert ca. 500 kg Lignosulfosäuren pro Stunde. Für den Großeinsatz können der gewünschten Produktionskapazität entsprechend Paare von Reaktionsgefäßen 10, 12 zu Batterien zusammengeschaltet werden.

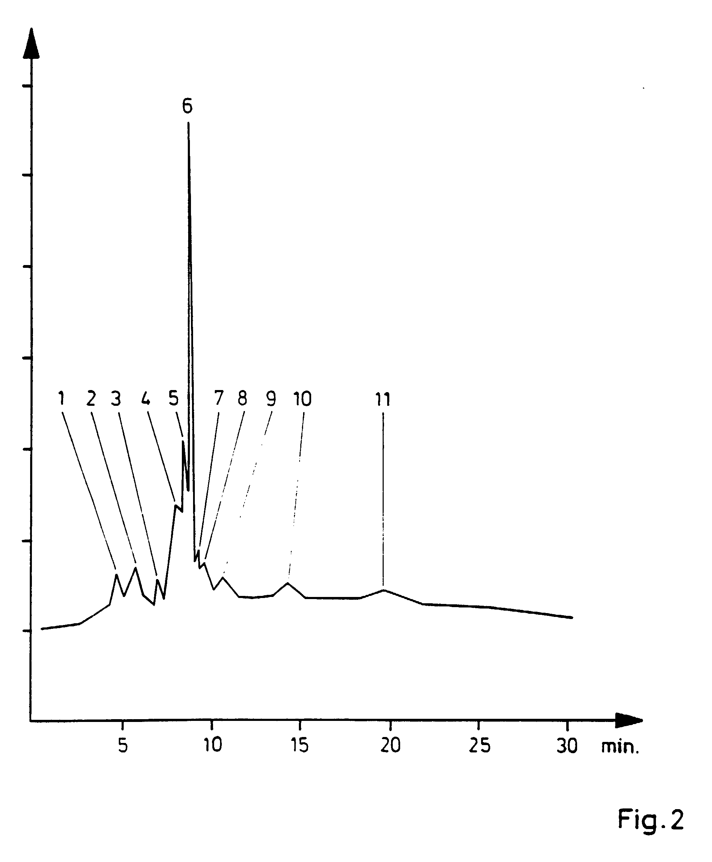

Fig. 2 ist ein HPLC / GFC-Chromatogramm (High Pressure Liquid Chromatography / Gelfiltrationschromatographie) einer Sulfitzellstoffablauge, die in der beschriebenen Anlage behandelt wurde. Aufgetragen ist mit linearer Skaia die Molekularmassenverteilung in Abhängigkeit von der Retentionszeit. Neben Ligninpeaks 3, 4, 5, 6, 8, 10 und 11 erkennt an Peaks zahlreicher Verunreinigungen.

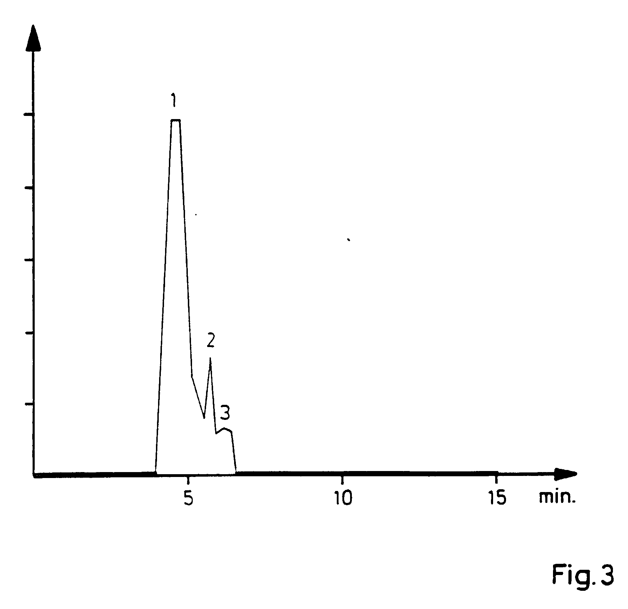

Fig. 3 ist ein HPLC / GFC-Chromatogramm der gewonnenen Ligninsulfosäuren. Man erkennt in einem engen Molekularmassenband drei Ligninpeaks und praktisch keine Verunreinigungen. Man hat also eine reine Molekularmassenverteilung der Ligninsulfosäuren. Der Peak 1 stellt die größte, und der Peak 3 die kleinste Molekularmasse der Ligninsulfosäuren dar. Die Zeitskala ist verkürzt wiedergegeben. Zwischen 15 min und 30 min entspricht der Verlauf des Chromatogramms dem zwischen 10 min und 15 min.

## Patentansprüche

1. Verfahren zu einer elektrochemischen Behandlung von Ligninsulfonate enthaltender Zellstoffablauge in einem Reaktionsgefäß, das durch ein Diaphragma (14) oder eine Membran in einen Kathodenraum mit einer Kathode (24) und in einen Anodenraum mit einer Anode (26) unterteilt ist, bei dem man die Zellstoffablauge nur einem der Elektrodenräume und dem anderen Elektroden raum einen anderen Elektrolyten zuführt, dadurch gekennzeichnet, daß man die Zellstoffablauge dem Anodenraum (18) zuführt, und daß man es bei konstant geregeltem elektrischen Gleichstrom durchführt.

2. Verfahren zu einer elektrochemischen Behandlung von Ligninsulfonate enthaltender Zellstoffablauge in zwei Reaktionsgefäßen (10, 12), die durch ein Diaphragma (14) oder eine Membran in je einen Kathodenraum (16, 20) mit einer Kathode (24) und in je einem Anodenraum (18, 22) mit einer Anode (26) unterteilt sind, bei dem man bei konstant geregeltem elektrischen Gleichstrom eine zweistufige Behandlung der Zellstoffablauge durchführt, indem man diese dem Anodenraum (18) des ersten Reaktionsgefäßes und dem Kathodenraum (16) des ersten Reaktionsgefäßes einen anderen Elektrolyten zuführt und das in dem Anodenraum (18) des ersten Reaktionsgefäßes (10) gewonnene Zwischenprodukt dem Kathodenraum (20) des zweiten Reaktionsgefäßes (12) und dem Anodenraum (22) des zweiten Reaktionsgefäßes (12) einem anderen Elektrolyten zuführt.

3. Verfahren nach Anspruch 1 oder 2, dadurch gekennzeichnet, daß man als anderen Elektrolyten Wasser verwendet.

4. Verfahren nach einem der Ansprüche 1 bis 3, dadurch gekennzeichnet, daß man es kontinuierlich durchführt.

5. Verfahren nach einem der Ansprüche 1 bis 4, dadurch gekennzeichnet, daß man zur Steuerung des Materialflusses die elektrische Leitfähigkeit oder eine optische Eigenschaft einer Prozeßflüssigkeit erfaßt, insbesondere ihre optische Dichte oder ihre Farbtönung.

6. Verfahren nach einem der Ansprüche 1 bis 5, dadurch gekennzeichnet, daß die Kathode (24) aus Eisen oder Aluminium und die Anode (26) aus Edelstahl, insbesondere V4A-Stahl, besteht.

7. Verfahren nach einem der Ansprüche 1 bis 6, dadurch gekennzeichnet, daß das Diaphragma (14) aus Sinterkeramik besteht.

8. Verfahren nach einem der Ansprüche 1 bis 7, gekennzeichnet durch wenigstens eine Meßeinheit, mit der die elektrische Leitfähigkeit oder eine optische Eigenschaft von Flüssigkeit in dem Elektrodenraum eines Reaktionsgefäßes (10, 12), insbesondere in dem Kathodenraum (16) des ersten Reaktionsgefäßes (10) und dem Anodenraum (22) des zweiten Reaktionsgefäßes (12), erfaßbar ist, beispielsweise ihre optische Dichte oder ihre Farbtönung.

9. Verfahren nach Anspruch 8, dadurch gekennzeichnet, daß die Meßeinheit eine Lichtsender-Lichtempfängereinheit (52) mit einer Laserdiode (54) und einem Fototransistor (56) ist.

## Claims

1. Process for an electrochemical treatment of cellulose waste lye which contains lignin sulphonates and which is contained in a reaction vessel which is subdivided by means of a diaphragm (14) or a membrane into a cathode chamber comprising a cathode (24) and into an anode chamber comprising an anode (26), wherein the cellulose waste lye is supplied to only one of the electrode chambers and another electrolyte is supplied to the other electrode chamber, characterised in that the cellulose waste lye is supplied to the anode chamber (18) and that the process is carried out at a constantly regulated direct electrical current.

2. Process for an electrochemical treatment of cellulose waste lye which contains lignin sulphonates and is contained in two reaction vessels (10, 12) which are subdivided in each case by means of a diaphragm (14) or a membrane into a cathode chamber (16, 20) comprising a cathode (24) and an anode chamber (18, 22) comprising an anode (26), wherein the cellulose waste lye is treated in two steps at a constantly regulated direct electrical current and wherein the cellulose waste lye is supplied to the anode chamber (18) of the first reaction vessel and another electrolyte is supplied to the cathode chamber (16) of the first reaction vessel and the intermediate product obtained in the anode chamber (18) of the first reaction vessel (10) is supplied to the cathode chamber (20) of the second reaction vessel (12) and another electrolyte is supplied to the anode chamber (22) of the second reaction vessel (12).

3. Process according to claim 1 or 2, characterised in that water is used as the other electrolyte.

4. Process according to any one of claims 1 to 3, characterised in that the process is carried out continuously.

5. Process according to any one of claims 1 to 4, characterised in that in order to control the flow of material the electric conductivity or an optical property of a process liquid is ascertained, in particular its optical density or its colour tone.

6. Process according to any one of claims 1 to 5, characterised in that the cathode (24) consists of iron or aluminium and the anode (26) consists of special steel, in particular VA4 steel.

7. Process according to any one of claims 1 to 6, characterised in that the diaphragm (14) consists of sintered ceramic.

8. Process according to any one of claims 1 to 7, characterised by at least one measuring unit with which it is possible to ascertain the electric conductivity or an optical property, for example the optical density or colour tone, of a liquid in the electrode chamber of a reaction vessel (10,12), in particular in the cathode chamber (16) of the first reaction vessel (10) and in the anode chamber (22) of the second reaction vessel (12).

9. Process according to claim 8, characterised in that the measuring unit is a light emitter/light receiver unit (52) having a laser diode (54) and a phototransistor (56).

## Revendications

1. Procédé pour un traitement électrochimique d'une lessive cellulosique contenant du sulfonate de lignine dans un réacteur qui est divisé par un diaphragme (14) ou membrane, en une chambre de cathode avec une cathode (24) et en une chambre d'anode avec une anode (26), dans lequel on amène la lessive cellulosique uniquement à l'une des chambres d'électrodes et à l'autre chambre d'électrodes un autre électrolyte, caractérisé en ce que l'on amène la lessive cellulosique à la chambre d'anode (18) et en ce que l'on effectue le procédé sous courant électrique continu régulé de façon constante.

2. Procédé pour le traitement électrochimique de lessive cellulosique contenant du sulfonate de lignine dans deux réacteurs (10, 12) qui sont séparés par un diaphragme (14) ou une membrane en respectivement une chambre de cathode (16, 20) avec une cathode (24) et en respectivement une chambre d'anode (18, 22) avec une anode (26), procédé dans lequel on procède au traitement en deux étapes de la lessive cellulosique sous courant électrique continu régulé de façon constante, en amenant celle-ci à la chambre d'anode (18) du premier réacteur et en amenant un autre électrolyte à la chambre de cathode (16) du premier réacteur et le produit intermédiaire obtenu dans la chambre d'anode (18) du premier réacteur (10) étant amené à la chambre de cathode (20) du second réacteur (12) et un autre électrolyte étant amené à la chambre d'anode (22) du second réacteur (12).

3. Procédé selon la revendication 1 ou 2, caractérisé en ce que l'on utilise de l'eau en tant qu'autre électrolyte.

4. Procédé selon l'une des revendications 1 à 3, caractérisé en ce que l'on effectue le procédé de façon continue.

5. Procédé selon l'une des revendications 1 à 4, caractérisé en ce que pour la commande du flux de matériau, on saisit la conductivité électrique ou une propriété optique d'un liquide de traitement, en particulier sa densité optique ou sa coloration.

6. Procédé selon l'une des revendications 1 à 5, caractérisé en ce que la cathode (24) est réalisée à partir de fer ou d'aluminium et l'anode (26) est en acier noble, en particulier de l'acier V4A.

7. Procédé selon l'une des revendications 1 à 6, caractérisé en ce que le diaphragme (14) est réalisé à partir de céramique frittée.

8. Procédé selon l'une des revendications 1 à 7, caractérisé par au moins une unité de mesure avec laquelle on pourra saisir la conductivité électrique ou une propriété optique du liquide dans la chambre d'électrodes d'un réacteur (10, 12), en particulier dans la chambre de cathode (16) du premier réacteur (10) et dans la chambre d'anode (22) du second réacteur (12), par exemple sa densité optique ou sa coloration.

9. Procédé selon la revendication 8, caractérisé en ce que l'unité de mesure est une unité émettrice et réceptrice de lumière (52) avec une diode laser (54) et un phototransistor (56).
